# EUROPÄISCHE PATENTSCHRIFT

(11) **EP 3 450 132 B1**
(45) Veröffentlichungstag und Bekanntmachung des Hinweises auf die Patenterteilung: **05.08.2020**
(21) Anmeldenummer: 18171124.3
(22) Anmeldetag: 08.05.2018
(51) Int. Cl.: B29C 48/31, B29D 30/52, B29C 48/07, B29C 48/18

(54) **ENDFORM-VORRICHTUNG ZUM AUSFORMEN VON EXTRUDIERTEN KAUTSCHUKMISCHUNGEN ZU EINEM GESAMTKAUTSCHUKELEMENT, EIN EXTRUDER-FORM-SYSTEM UMFASSEND DIE ENDFORM-VORRICHTUNG, UND VERWENDUNGEN**
FINAL MOULD DEVICE FOR SHAPING OF EXTRUDED RUBBER COMPOSITIONS TO FORM A FULL RUBBER ELEMENT, AN EXTRUDER-MOULD SYSTEM COMPRISING THE FINAL MOULD DEVICE AND CORRESPONDING USES
DISPOSITIF DE MOULE FINAL DESTINÉ AU DÉMOULAGE À PARTIR DE MÉLANGES DE CAOUTCHOUC EXTRUDÉS POUR OBTENIR UN ÉLÉMENT GLOBAL DE CAOUTCHOUC, SYSTÈME DE MOULAGE PAR EXTRUSION COMPORTANT LE DISPOSITIF DE MOULE FINAL AINSI QU'UTILISATIONS CORRESPONDANTES

(30) Priorität: 23.08.2017 DE 102017214763
(43) Veröffentlichungstag der Anmeldung: 06.03.2019
(73) Patentinhaber: Continental Reifen Deutschland GmbH, 30165 Hannover (DE)
(72) Erfinder: Wichmann, Peter, 31535 Neustadt (DE); Reinhardt, Thomas, 30890 Barsighausen (DE); Disselhoff, Stephan, 29336 Nienhagen (DE)
(74) Vertreter: Finger, Karsten

(56) Entgegenhaltungen:
- FR-A1- 2 524 380
- US-A- 2 720 679

## Beschreibung

Die Erfindung betrifft eine Endform-Vorrichtung zum Ausformen von extrudierten Kautschukmischungen zu einem Gesamtkautschukelement, aufweisend einen ersten Fließkanal. Die Erfindung betrifft auch ein Extruder-Form-System umfassend die Endform-Vorrichtung sowie entsprechende Verwendungen der Endform-Vorrichtung und des Extruder-Form-Systems.

In der Kautschukindustrie werden Kautschukmischungen in Extrudern extrudiert und anschließend in einem Extruder-Form-System in ein Gesamtkautschukelement mit einem vorbestimmten Profil geformt. Häufig umfasst das Extruder-Form-System dabei eine Vorform-Vorrichtung und eine Endform-Vorrichtung.

Aus dem Stand der Technik sind Extruder-Form-Systems bekannt. So wird beispielsweise in US 4683095 A eine Extruder-Vorrichtung offenbart, wobei die Extruder-Vorrichtung einen "Pre-Die" und einen "Final Die" aufweist.

Endform-Vorrichtungen aus dem Stand der Technik haben häufig die Funktion des finalen Ausformens der extrudierten Kautschukmischungen und geben so dem resultierenden Gesamtkautschukelement ein vorbestimmtes Profil. Meistens kann eine im Stand der Technik bekannte Endform-Vorrichtung nur ausschließlich in Verbindung mit einer speziell angefertigten Vorform-Vorrichtung eingesetzt werden.

Da im Stand der Technik jedes Profil eines Gesamtkautschukelements eine andere Endform-Vorrichtung benötigt, muss die Vorform-Vorrichtung in den meisten Fällen zusammen mit der Endform-Vorrichtung ausgewechselt werden, sobald ein anderes Gesamtkautschukelement hergestellt werden soll. Das Auswechseln dieser Vorrichtungen beansprucht eine nicht zu vernachlässigende Zeit und verringert daher die mögliche maximale Produktionszeit. Es gibt daher einen Bedarf im Stand der Technik eine Lösung bereit zu stellen, der es weniger Ausfälle in die Produktionszeit gibt.

Der Erfindung liegt daher die Aufgabe zugrunde, eine verbesserte Endform-Vorrichtung und ein verbessertes Extruder-Form-System bereitzustellen, welche bzw. welches insbesondere eine einfachere Wartung oder einen geringeren Zeitaufwand beim Umstellen der Extrusionslinie auf ein neues Profil eines Gesamtkautschukelements bewirkt im Vergleich zu im Stand der Technik bekannten Lösungen.

Der Gegenstand des Anspruchs 1 löst die vorstehend beschriebene Aufgabe. Die Erfindung ist durch die Ansprüche definiert.

Offenbart ist eine Endform-Vorrichtung zum Ausformen von extrudierten Kautschukmischungen zu einem Gesamtkautschukelement, aufweisend einen ersten Fließkanal, dadurch gekennzeichnet, dass
- die Endform-Vorrichtung im ersten Fließkanal eine, zwei, drei, vier, fünf, sechs oder mehr vertikal verschiebbare Komponenten aufweist.

Bevorzugt ist eine vorstehend beschriebenen Endform-Vorrichtung durch Verschieben der verschiebbaren Komponenten dazu geeignet, Gesamtkautschukelemente mit verschiedenen Höhen und/oder Breiten auszuformen.

Unter den Ausdruck "Vorform-Vorrichtung" fällt im Rahmen der vorliegenden Erfindung ein "Pre-Die". Eine beschriebene Vorform-Vorrichtung ist dem Fachmann auch unter dem Ausdruck "Preformer" und unter dem Ausdruck "Vorschablone", "Vorleiste" oder "Vorform-Leiste" bekannt.

### Beschreibungsseite 2a (einzufügen zwischen Seite 1 und Seite 2 der ursprünglich eingereichten Anmeldungsunterlagen):

Im Stand der Technik sind folgende Ausführungen zu finden:
US 2720679 A offenbart eine Endform-Vorrichtung gemäß dem Oberbegriff des Anspruchs 1 oder eine Düse umfassend einen Rahmen mit einer zum Formen eines Strips geeigneten Öffnung, mit einer Mehrzahl von gleichbreiten Düsengliedern befestigt an dem besagten Rahmen und mit einstellbaren Cuttern, wobei die Cutter eine erste Schneidekante und eine zweite Schneidekante mit Einstellungsmitteln zum Heben und Senken der zweiten Schneidekante aufweisen und dazu vorgesehen sind, eine vordefinierte Menge an Material von einem Strip zu entfernen (vgl. Anspruch 1).
FR 2524380 A1 betrifft ein Verfahren zum regulierbaren Schneiden für die Extrusion eines Kunststoffprofils (vgl. Anspruch 1). Zudem wird ein Kanal mit einer Länge von 67,95 cm offenbart (Seite 7, Zeile 4). Es werden verschiedene Achsenelemente (52, 56, 60) offenbart, welche Segmente in Position halten (s. Seite 6, Zeilen 1 bis 13).

Unter den Ausdruck "Endform-Vorrichtung" fällt im Rahmen der vorliegenden Erfindung ein "Final Die". Eine beschriebene Endform-Vorrichtung ist dem Fachmann auch unter dem Ausdruck "Endformer", "Endschablone" "Endleiste" oder "Endform-Leiste" bekannt.

Wie vorstehend beschrieben kommt es häufig während der Produktion von verschiedenen Gesamtkautschukprofilen vor, dass die im Stand der Technik bekannten Endform-Vorrichtungen ausgetauscht werden müssen, sobald sich das gewünschte Profil des resultierenden Gesamtkautschukelements verändert. Eine beschriebene Endform-Vorrichtung weist hingegen eine, zwei, drei, vier, fünf, sechs oder mehr als sechs vertikal verschiebbare Komponenten auf, mithilfe derer das Profil des Gesamtkautschukelements variiert werden kann. Dies hat den Vorteil, dass mit Hilfe einer einzigen beschriebenen Endform-Vorrichtung eine Mehrzahl von verschiedenen Gesamtkautschukprofilen hergestellt werden können ohne den Einsatz von mehreren Endform-Vorrichtungen, wie dies bisher im Stand der Technik notwendig war.

Im Rahmen der vorliegenden Erfindung besteht eine Kautschukkomponente bevorzugt aus einer extrudierten Kautschukmischung.

Im Rahmen der vorliegenden Erfindung fällt unter den Ausdruck "Gesamtkautschukelement" bevorzugt auch ein Gesamtkautschukprofil.

Unter dem Ausdruck "vertikal verschiebbar" fällt bevorzugt jede Verschiebungsrichtung der verschiebbaren Komponenten, welche senkrecht zur Extrusionsrichtung ist. Besonders bevorzugt ist die Verschiebungsrichtung der vertikal verschiebbaren Komponenten einer beschriebenen Endform-Vorrichtung
- senkrecht zur Extrusionsrichtung
   und
- senkrecht zur Fixierungsrichtung der einen oder der mehreren Arretierungsvorrichtung für die vertikal verschiebbaren Komponenten oder
   senkrecht zur Mittelachse einer beschriebenen Endform-Vorrichtung.

Ganz besonders bevorzugt bedeutet der Ausdruck "vertikal verschiebbar", dass die Verschiebungsrichtung der vertikal verschiebbaren Komponenten einer beschriebenen Endform-Vorrichtung während des Ausformens des Gesamtkautschukelements parallel zur Gravitationskraft der Erde ist.

Im Rahmen der vorliegenden Erfindung wird unter dem Ausdruck "Ausformung von extrudierten Kautschukmischungen zu einem Gesamtkautschukelement" bevorzugt verstanden, dass die verschiedenen extrudierten Kautschukmischungen in Form von Kautschukkomponenten aus der Vorform-Vorrichtung in eine beschriebene Endform-Vorrichtung geführt werden und in der beschriebenen Endform-Vorrichtung miteinander in Kontakt treten. Durch eine geeignete Form der Austrittsöffnung des Fließkanals einer Endform-Vorrichtung werden die verschiedenen Kautschukkomponenten dabei nicht nur an ihre geeignete Stelle gebracht, sondern auch zu der vorgesehenen Form, dem Gesamtkautschukprofil, präzise ausgeformt.

Bevorzugt ist eine Vorrichtung wie vorstehend beschrieben oder wie vorstehend als bevorzugt beschrieben, wobei die Endform-Vorrichtung eine Führungsvorrichtung zur vertikalen Führung der vertikal verschiebbaren Komponenten aufweist, bevorzugt eine Führungsvorrichtung zur passgenauen vertikalen Führung der vertikal verschiebbaren Komponenten. Bevorzugt eignet sich diese Führungsvorrichtung zur Führung der Mehrzahl, der Mehrheit oder besonders bevorzugt sämtlicher vertikal verschiebbarer Komponenten.

Der Vorteil des vorstehend beschriebenen Aspektes der vorliegenden Erfindung ist, dass die vertikale Verschiebung der Komponenten auf sehr einfache, zuverlässige und wiederholbare Weise garantiert wird. Eine vorstehend beschriebene Führungsvorrichtung einer beschriebenen Endform-Vorrichtung könnte beispielsweise eine geradlinige und senkrecht zur Extrusionsrichtung verlaufende Metallleiste sein, welche an geeigneter Stelle in einem oder in dem ersten Fließkanal einer beschriebenen Endform-Vorrichtung angebracht ist. Bevorzugt wird eine solche Metallleiste von u-förmigen vertikal verschiebbaren Komponenten gemäß einer nachstehend beschriebenen bevorzugten Ausführungsform umschlossen. Sowohl die Höhe der Metallleiste als auch die Höhe der Einschnitt der U-Form der vertikal verschiebbaren Komponenten bestimmen dabei, wie weit die vertikal verschiebbaren Komponenten vertikal verschoben werden können.

Bevorzugt weist eine beschriebene Endform-Vorrichtung mindestens einen Fließkanal auf, besonders bevorzugt genau einen Fließkanal. Bevorzugt ist es auch, wenn eine beschriebene Endform-Vorrichtung genau eine Austrittsöffnung am Ende eines ersten Fließkanales aufweist, aus der das Gesamtkautschukelement in Form des Gesamtkautschukprofils in Extrusionsrichtung austritt.

Eine vertikal verschiebbare Komponente einer beschriebenen Endform-Vorrichtung erstreckt sich in Richtung einer Höhe, in Richtung einer Tiefe und in Richtung einer Breite. Die Höhe einer vertikal verschiebbaren Komponente einer beschriebenen sich im Einsatz befindlichen Endform-Vorrichtung erstreckt sich senkrecht zur Extrusionsrichtung und bevorzugt in vertikale Richtung. Die Tiefe einer vertikal verschiebbaren Komponente einer erfindungsmäßen, sich im Einsatz befindlichen Endform-Vorrichtung erstreckt sich parallel zur Extrusionsrichtung. Die Tiefe einer vertikal verschiebbaren Komponente einer erfindungsmäßen, sich im Einsatz befindlichen Endform-Vorrichtung ist daher bevorzugt senkrecht zu ihrer Höhe. Die Breite einer vertikal verschiebbaren Komponente einer beschriebenen, sich im Einsatz befindlichen Endform-Vorrichtung erstreckt sich bevorzugt in waagerechter Richtung und ist bevorzugt senkrecht zur Tiefe der vertikal verschiebbaren Komponente.

Bevorzugt ist eine Vorrichtung wie vorstehend beschrieben oder wie vorstehend als bevorzugt beschrieben, wobei mindestens eine der vertikal verschiebbaren Komponenten eine Höhe im Bereich von 15 mm bis 120 mm, bevorzugt im Bereich von 20 mm bis 100 mm, besonders bevorzugt eine Höhe im Bereich von 30 bis 60 mm, aufweist. Bevorzugt gilt dieser Aspekt für eine Mehrzahl, für die Mehrheit oder für sämtliche der vertikal verschiebbaren Komponenten.

Ein Vorteil des vorstehend beschriebenen Aspektes der vorliegenden Erfindung ist, dass die vorstehend beschriebenen Mindest- und Höchstwerte garantieren, dass die vertikal verschiebbaren Komponenten einerseits um eine ausreichende Mindesthöhe verschoben werden können. Andererseits dürfen die vertikal verschiebbaren Komponenten einen Höchstwert nicht überschreiten, über dem der von der Kautschukmischung ausgehende Druck auf die Komponente während des Ausformens von extrudierten Kautschukmischungen zu einem Gesamtkautschukelement zu hoch wäre. Letzteres könnte zu Materialschäden der vertikal verschiebbaren Komponenten führen.

Bevorzugt ist eine Vorrichtung wie vorstehend beschrieben oder wie vorstehend als bevorzugt beschrieben, wobei mindestens eine der vertikal verschiebbaren Komponenten eine Tiefe im Bereich von 8 mm bis 25 mm, bevorzugt im Bereich von 14 mm bis 16 mm, aufweist. Bevorzugt gilt dieser Aspekt für eine Mehrzahl, für die Mehrheit oder für sämtliche der vertikal verschiebbaren Komponenten.

Ein Vorteil des vorstehend beschriebenen Aspektes der vorliegenden Erfindung ist, dass die vertikal verschiebbaren Komponente den von der Kautschukmischung ausgehenden Druck dauerhaft standhält. Dies könnte ansonsten zu Materialschäden der vertikal verschiebbaren Komponenten führen.

Bevorzugt ist eine Vorrichtung wie vorstehend beschrieben oder wie vorstehend als bevorzugt beschrieben, wobei mindestens eine der vertikal verschiebbaren Komponenten eine Breite im Bereich von 1 mm bis 10 mm, bevorzugt eine Breite im Bereich von 4 mm bis 6 mm, aufweist. Bevorzugt gilt dieser Aspekt für eine Mehrzahl, für die Mehrheit, oder für sämtliche der vertikal verschiebbaren Komponenten.

Ein Vorteil des vorstehend beschriebenen Aspektes der vorliegenden Erfindung ist, dass die vorstehend beschriebenen Bereiche für die Breite der vertikal verschiebbaren Komponente gewährleisten, dass das Profil des Gesamtkautschukelements möglichst genau definiert werden kann und die vertikal verschiebbaren Komponenten noch breit genug sind, so dass sie den von der Kautschukmischung ausgehenden Druck standhalten können.

Bevorzugt ist eine Vorrichtung wie vorstehend beschrieben oder wie vorstehend als bevorzugt beschrieben, wobei mindestens eine der vertikal verschiebbaren Komponenten in vertikale Richtung um 5 mm bis 60 mm verschoben werden kann, bevorzugt um 5 mm bis 25 mm, besonders bevorzugt um 5 mm bis 15 mm. Bevorzugt gilt dieser Aspekt für eine Mehrzahl, für die Mehrheit, oder für sämtliche der vertikal verschiebbaren Komponenten. Damit die vertikal verschiebbaren Komponenten in vertikale Richtung verschoben werden können, muss eine beschriebene Vorrichtung bevorzugt auch einen entsprechenden Hohlraum aufweisen, welcher die vertikal verschiebbaren Komponenten aufnehmen kann, um die Austrittsöffnung des Fließkanals freizugeben.

Ein Vorteil des vorstehend beschriebenen Aspektes der vorliegenden Erfindung ist, dass eine besonders große Anzahl von verschiedenen Profilen von Gesamtkautschukelementen hergestellt werden kann.

Bevorzugt ist eine Vorrichtung wie vorstehend beschrieben oder wie vorstehend als bevorzugt beschrieben, wobei die Endform-Vorrichtung eine Anzahl von vertikal verschiebbaren Komponenten im Bereich von 40 bis 400 aufweist, bevorzugt eine Anzahl von 50 bis 200, besonders bevorzugt eine Anzahl von 70 bis 80.

Ein Vorteil des vorstehend beschriebenen Aspektes der vorliegenden Erfindung ist, dass ausreichend breite und/oder ausreichend fein definierte Profile von Gesamtkautschukelementen hergestellt werden können.

Bevorzugt ist eine Vorrichtung wie vorstehend beschrieben oder wie vorstehend als bevorzugt beschrieben, wobei der erste Fließkanal
- eine Breite im Bereich von 100 mm bis 1000 mm, bevorzugt im Bereich von 150 mm bis 400 mm,
   und/oder
- eine Tiefe im Bereich von 10 bis 50 mm, bevorzugt im Bereich von 15 bis 25 mm, aufweist.

Ein Vorteil des vorstehend beschriebenen Aspektes der vorliegenden Erfindung ist, dass die vorstehend beschriebene Breite und Tiefe des Fließkanals einer beschriebenen Endform-Vorrichtung besonders gut mit den vorstehend beschriebenen geometrischen Ausmaßen in Höhe, Tiefe und Breite der vertikal verschiebbaren Komponenten der beschriebenen Endform-Vorrichtung zusammenwirken.

Die Höhe des Fließkanals erstreckt sich bevorzugt parallel zur Höhe der vertikal verschiebbaren Komponenten. Die Tiefe des Fließkanals erstreckt sich bevorzugt parallel zur Tiefe der vertikal verschiebbaren Komponenten.

Besonders bevorzugt ist eine Vorrichtung wie vorstehend beschrieben oder wie vorstehend als bevorzugt beschrieben, wobei sämtliche der 2, 3, 4, 5, 6 oder mehr vertikal verschiebbaren Komponenten lückenlos senkrecht zur Extrusionsrichtung aneinander aufgereiht sind. Die erste und letzte der vertikal verschiebbaren Komponenten in dieser Aneinanderreihung werden auch die zwei endständigen vertikal verschiebbaren Komponenten genannt.

Bevorzugt ist eine Vorrichtung wie vorstehend als bevorzugt beschrieben oder wie vorstehend als besonders bevorzugt beschrieben, wobei eine, zwei oder mehr Arretierungsvorrichtungen zur Fixierung der vertikal verschiebbaren Komponenten derart einen Druck auf eine der zwei endständigen Fixierung der vertikal verschiebbaren Komponenten oder auf die zwei endständigen der vertikal verschiebbaren Komponenten ausüben, dass sämtliche der vertikal verschiebbaren Komponenten in einer voreingestellten Position eingeklemmt werden.
Im Rahmen der vorliegenden Erfindung ist ein Arretierungsvorrichtung bevorzugt eine Schraube, beispielsweise eine Zylinderschraube der Größe M8 und mit Innensechskant gemäß DIN 912, wobei die Zylinderschraube aus Stahl mit einer Festigkeit von 8.8 besteht. Bevorzugt wird die Arretierungsvorrichtung, insbesondere die Zylinderschraube, bis zu einem Anzugsmoment von 20 Nm angezogen.
Die zwei endständigen vertikal verschiebbaren Komponenten einer beschriebenen Endform-Vorrichtung sind dabei bevorzugt die beiden vertikal verschiebbaren Komponenten, welche sich in der Reihe sämtlicher vertikal verschiebbaren Komponenten eine erfindungsmäßen Endform-Vorrichtung an der ersten und an der letzten Position der Reihe sämtlicher vertikal verschiebbaren Komponenten befinden.
Im Rahmen der vorliegenden Erfindung ist die vorbestimmten Position sämtlicher vertikal verschiebbaren Komponenten bevorzugt so gewählt, dass bei funktionsgemäßem Betrieb der Extruderanlage ein Gesamtkautschukelement entsteht, welches das beabsichtigte und an gezielte Profil aufweist.
Ein Vorteil des vorstehend beschriebenen Aspektes der vorliegenden Erfindung ist, dass die Gesamtzahl der vertikal verschiebbaren Komponenten auf besonders einfache Weise in die gewünschte Funktion fixiert werden kann und aus dieser ebenfalls auf besonders einfache Weise wieder gelöst werden kann. Dies erspart viel Zeit beim Wechsel von einem Profil auf ein anderes Profil eines Gesamtkautschukelements.

Erfindungsgemäß ist eine Vorrichtung wie vorstehend beschrieben oder wie vorstehend als bevorzugt beschrieben, wobei eine Mehrzahl oder sämtliche der verschiebbaren Komponenten in einem Querschnitt entlang der Extrusionsrichtung eine zu einer vertikalen Führung der vertikal verschiebbaren Komponenten geeignete U-Form aufweisen. Erfindungsgemäß ist auch eine Vorrichtung wie vorstehend beschrieben oder wie vorstehend als bevorzugt beschrieben, wobei eine Mehrzahl oder sämtliche der verschiebbaren Komponenten in einem Querschnitt entlang der Extrusionsrichtung eine zu einer passgenauen vertikalen Führung der vertikal verschiebbaren Komponenten geeignete U-Form aufweist.

Ein Vorteil des vorstehend beschriebenen Aspektes der vorliegenden Erfindung ist, dass die einzelnen vertikal verschiebbaren Komponenten durch die Form nicht nur robuster sind, sondern auch einfacher und genauer in vertikaler Richtung geführt werden können. Eine vertikal verschiebbare Komponente in U-Form weist dabei zwei geradlinige Beine in dieselbe Erstreckungsrichtung auf, wobei die beiden gradlinigen Beine an der Unterseite durch ein Verbindungsstück miteinander verbunden sind und somit die Form eines "U" darstellen. Besonders bevorzugt ist die vertikal verschiebbare Komponente in U-Form in einer beschriebenen Endform-Vorrichtung so angeordnet, dass die beiden gradlinigen Beine der vertikal verschiebbaren Komponente in U-Form in Extrusionsrichtung hintereinander liegen und besonders bevorzugt sich während des Ausformens von extrudierten Kautschukmischungen zu einem Gesamtkautschukelement in vertikale Richtung erstrecken, d.h. parallel zur Schwerkraft der Erde.
Im Rahmen der vorliegenden Erfindung wird der Leerraum zwischen den beiden gradlinigen Beinen eine vertikal verschiebbaren Komponenten U-Form auch als Einschnitt der vertikal verschiebbaren Komponente bezeichnet. An einer Wand des Fließkanals der beschriebenen Endform-Vorrichtung ist bevorzugt eine Führungsvorrichtung zur Führung der vertikal verschiebbaren Komponenten angebracht. Besonders bevorzugt ist diese Führungsvorrichtung derart gestaltet, dass sie passgenau in den Einschnitt einer u-förmigen vertikal verschiebbaren Komponente passt und somit die vertikale Führung der vertikal verschiebbaren Komponenten garantiert. Die Führungsvorrichtung weißt dabei bevorzugt ein Haupterstreckung mit einer Haupterstreckungsrichtung auf, wobei die Haupterstreckungsrichtung während des Ausformens von extrudierten Kautschukmischungen zu einem Gesamtkautschukelement horizontal und senkrecht zur Extrusionsrichtung verläuft.

Besonders bevorzugt ist auch eine Vorrichtung wie vorstehend als besonders bevorzugt beschrieben, wobei der Einschnitt der U-Form sämtlicher verschiebbarer Komponenten eine Höhenerstreckung im Bereich von 5 mm bis 70 mm aufweist, bevorzugt im Bereich von 10 mm bis 35 mm, besonders bevorzugt im Bereich von 15 bis 25 mm. Die entsprechende Ausführungsform der beschriebenen Endform-Vorrichtung umfasst eine vorstehend beschriebene Führungsvorrichtung zur vertikalen Führung der vertikal verschiebbaren Komponenten, wobei die Führungsvorrichtung eine entsprechende Erstreckung zur Führung der vorstehend beschriebenen Einschnitte der U-Form sämtlicher verschiebbarer Komponenten aufweist.

Ein Vorteil des vorstehend beschriebenen Aspektes der vorliegenden Erfindung ist, dass durch die U-Form der vertikal verschiebbaren Komponenten die vertikal verschiebbaren Komponenten eine noch größer Höhe aufweisen können als vertikal verschiebbaren Komponenten wie vorstehend beschrieben, da durch die U-Form eine vertikal verschiebbare Komponente eine noch größere Stabilität gegen den Druck der extrudierten Kautschukmischung während des Ausformens Kautschukmischungen zu einem Gesamtkautschukelement aufweist.

Bevorzugt ist auch eine Vorrichtung wie vorstehend als besonders bevorzugt beschrieben, wobei die Vorrichtung mindestens einen Aktor zum vertikalen Verschieben der vertikal verschiebbaren Komponenten aufweist,
- wobei der mindestens eine Aktor das vertikale Verschieben der vertikal verschiebbaren Komponenten mittels hydraulischen, pneumatischen oder elektro-mechanischen Mitteln durchführt
   und
- wobei bevorzugt die Vorrichtung mindestens eine Regelkomponente zur Regelung des mindestens einen Aktors umfasst.

Im Rahmen der vorliegenden Erfindungen können Regelkomponenten kann jede dem Fachmann bekannte Regelelektronik umfassende Komponenten, wie beispielsweise ein Computer, sein.

Im Rahmen der vorliegenden Erfindungen können Aktoren, welche das vertikale Verschieben der vertikal verschiebbaren Komponenten mittels elektro-mechanischen Mitteln durchführen, beispielsweise einen Elektromotor sein. Der Elektromotor als ein Aktor der beschriebenen Vorrichtung könnte beispielsweise über eine Gewindespindel die vertikal verschiebbaren Komponenten verschieben. Dabei wird die vom Elektromotor erzeugte Drehbewegung bevorzugt in eine vertikale Bewegung der vertikal verschiebbaren Komponenten verändert. Der Aktor zum vertikalen Verschieben der vertikal verschiebbaren Komponenten ist bevorzugt ein Aktor zum vertikalen Positionieren der vertikal verschiebbaren Komponenten.

In besonderem Maße bevorzugt ist eine Endform-Vorrichtung zum Ausformen von extrudierten Kautschukmischungen zu einem Gesamtkautschukelement, aufweisend einen ersten Fließkanal, dadurch gekennzeichnet, dass
- die Endform-Vorrichtung im ersten Fließkanal einen, zwei, drei, vier, fünf, sechs oder mehr vertikal verschiebbare Komponenten aufweist,
wobei die Endform-Vorrichtung durch Verschieben der verschiebbaren Komponenten dazu geeignet ist, Gesamtkautschukelemente mit verschiedenen Höhen und Breiten auszuformen,
wobei
- sämtliche der vertikal verschiebbaren Komponenten in vertikale Richtung um 5 mm 15 mm,
- die Endform-Vorrichtung eine Anzahl von vertikal verschiebbaren Komponenten im Bereich von 70 bis 80 aufweist,
- der erste Fließkanal eine Breite im Bereich von 150 mm bis 400 mm,
- eine, zwei oder mehr Arretierungsvorrichtungen zur Fixierung der vertikal verschiebbaren Komponenten von außen derart auf eine der zwei endständigen oder auf die zwei endständigen der vertikal verschiebbaren Komponenten einen Druck ausüben, dass sämtliche der vertikal verschiebbaren Komponenten in einer voreingestellten Position eingeklemmt werden
   und
- sämtliche der verschiebbaren Komponenten in einem Querschnitt entlang der Extrusionsrichtung eine zu einer passgenauen vertikalen Führung der verschiebbaren Komponenten geeigneten U-Form aufweisen und der Einschnitt der U-Form sämtlicher verschiebbarer Komponenten im Querschnitt eine Erstreckung im Bereich von 15 bis 25 mm aufweist.

Die Erfindung betrifft auch ein Extruder-Form-System aufweisend eine Endform-Vorrichtung wie vorstehend beschrieben oder wie vorstehend als bevorzugt beschrieben und mindestens eine Vorform-Vorrichtung zum Positionieren von extrudierten Kautschukmischungen, wobei bevorzugt die an der Endform-Vorrichtung befestigte Vorform-Vorrichtung in Richtung einer Extrusionsrichtung räumlich vor der Endform-Vorrichtung liegt.

Die vorstehend beschriebenen vorteilhaften Aspekte einer beschriebenen Endform-Vorrichtung zum Ausformen von extrudierten Kautschukmischungen zu einem Gesamtkautschukelement gelten auch für sämtliche Aspekte eines nachstehend beschriebenen Extruder-Form-Systems und die nachstehend diskutierten vorteilhaften Aspekte beschriebener Extruder-Form-Systeme gelten entsprechend für sämtliche Aspekte einer beschriebenen Endform-Vorrichtung zum Ausformen von extrudierten Kautschukmischungen zu einem Gesamtkautschukelement.

Bevorzugt ist ein Extruder-Form-System wie vorstehend beschrieben oder wie vorstehend als bevorzugt beschrieben, wobei
- die Vorform-Vorrichtung ein Eingangsmodul und ein Ausgangsmodul aufweist und
- das Ausgangsmodul der Vorform-Vorrichtung an der Endform-Vorrichtung mithilfe einer Befestigungsvorrichtung befestigt werden kann.

Ein Vorteil des vorstehend beschriebenen Aspektes der vorliegenden Erfindung ist, dass bei einem seltenen aber doch nötigen Wechseln der beschriebenen Endform-Vorrichtung nicht auch die gesamte Vorform-Vorrichtung gewechselt werden muss, sondern nur das an der beschriebenen Endform-Vorrichtung befestigte Ausgangsmodul der Vorform-Vorrichtung. Die vorstehend beschriebene ein Eingangsmodul und ein Ausgangsmodul aufweisende Vorform-Vorrichtung ist nachstehend anhand von Aspekten näher beschrieben.

Die vorstehend beschriebenen vorteilhaften Aspekte einer beschriebenen Endform-Vorrichtung oder eines beschriebenen Extruder-Form-Systems gelten auch für sämtliche Aspekte der nachstehend beschriebenen Verwendungen.

Die Erfindung betrifft auch die Verwendung
- einer Endform-Vorrichtung wie vorstehend beschrieben oder wie vorstehend als bevorzugt beschrieben
   oder
- eines Extruder-Form-System wie vorstehend beschrieben oder wie vorstehend als bevorzugt beschrieben
zum Ausformen von extrudierten Kautschukmischungen zu einem Gesamtkautschukelement.

Weitere Merkmale, Vorteile und Einzelheiten, auf die die Erfindung in ihrem Umfang aber nicht beschränkt ist, werden nun anhand der Figuren 1 bis 5 näher beschrieben.

### Figurenbeschreibung:

Es zeigt:
- Figur 1:: Schematisch Darstellung der Prozessanordnung der Extruderköpfe, der Vorform-Vorrichtung, der Endform-Vorrichtung sowie des resultierenden Gesamtkautschukelements in einer Extruderanlage
- Figur 2:: Querschnittsansicht durch eine schematisch dargestellte erfindungsgemäß Endform-Vorrichtung in einer Ausführungsform, wobei die Querschnittebene senkrecht zur Extrusionsrichtung wie in Figur 1 durch das gestrichelte Rechteck Q angedeutet verläuft und die gesamte Austrittsöffnung des Fließkanals durch die vertikal verschiebbaren Komponenten verschlossen ist,
- Figur 3:: Querschnittsansicht durch einen Abschnitt einer schematisch dargestellten erfindungsgemäß Endform-Vorrichtung in einer weiteren Ausführungsform, wobei die Querschnittebene senkrecht zur Extrusionsrichtung verläuft und die vertikal verschiebbaren Komponenten vertikal so verschoben sind, dass sie eine Austrittsöffnung bilden,
- Figur 4:: Querschnittsansicht durch eine schematisch dargestellte erfindungsgemäß Endform-Vorrichtung wie in Figur 2 dargestellt, wobei die Querschnittebene parallel zur Extrusionsrichtung entlang der in Figur 2 dargestellten Linie A-A verläuft,
- Figur 5:: Querschnittsansicht durch einen Abschnitt einer schematisch dargestellten erfindungsgemäß Endform-Vorrichtung in einer weiteren Ausführungsform, wobei die Querschnittebene senkrecht zur Extrusionsrichtung verläuft.
- Figur 6:: Schematisch Darstellung der Anordnung des Eingangsmoduls und des Ausgangsmoduls einer Vorform-Vorrichtung in einer Aufnahmevorrichtung einer beschriebenen Extruderanlage

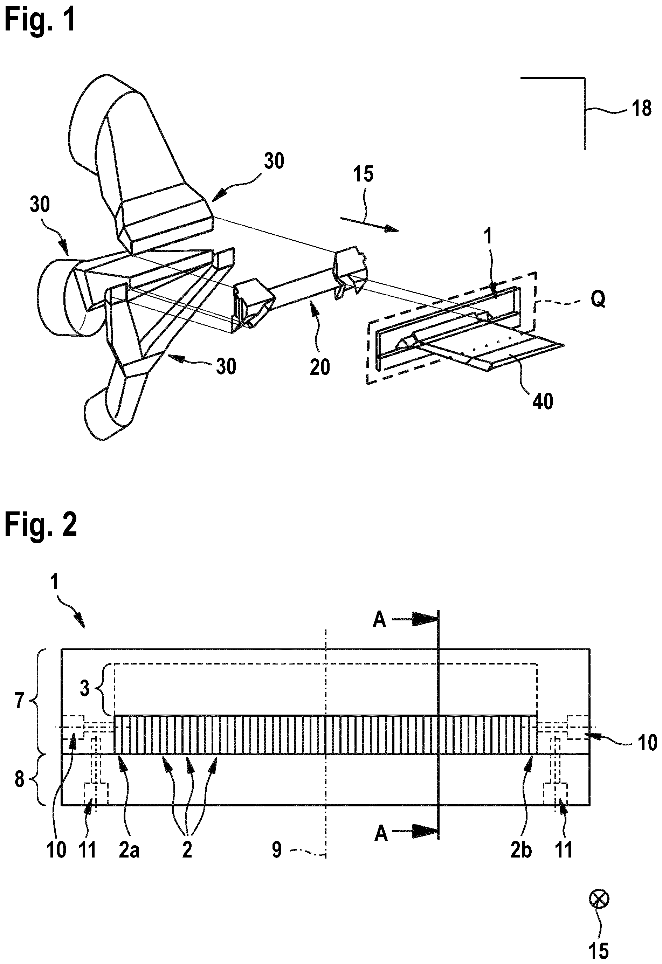

Figur 1 zeigt eine schematische Darstellung der Prozessanordnung in einer Extruderanlage. Zu sehen sind die Fließkanäle 30 mit den dazugehörigen Extruderköpfen, welche die verschiedenen Kautschukkomponenten zur Vorform-Vorrichtung 20 bringen und von dort aus in Extrusionsrichtung 15 weiter zur Endform-Vorrichtung 1 befördert werden. Die Endform-Vorrichtung 1 formt dabei das Gesamtkautschukelement 40 aus, welches als finales Produkt des Extrusionsprozesses resultiert.

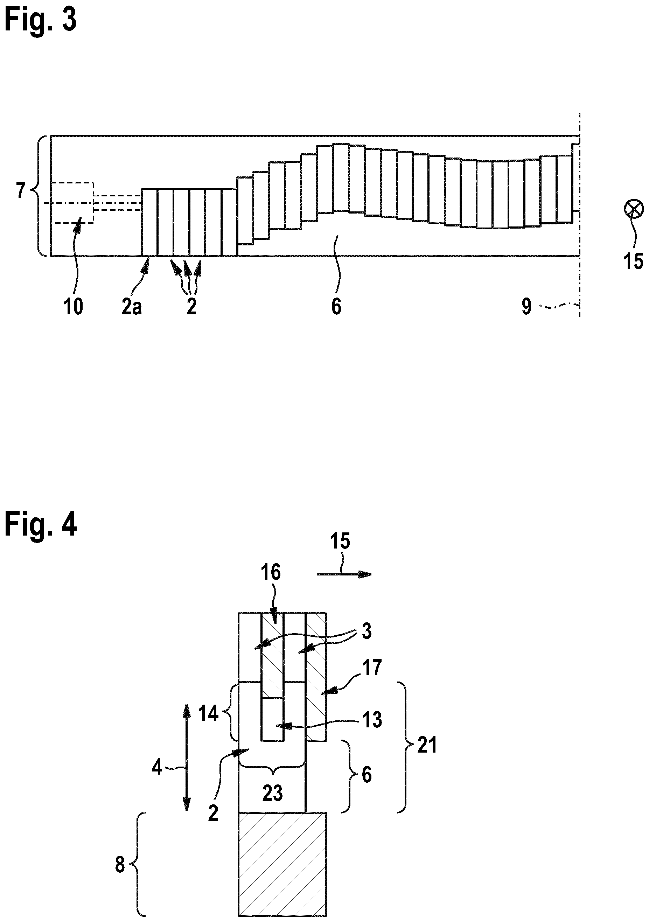

Figur 2 zeigt eine schematische Darstellung eines Querschnitts einer erfindungsgemäß beschriebenen Endform-Vorrichtung 1 gemäß einer ersten Ausführungsform, wobei die Querschnittebene senkrecht zur Extrusionsrichtung 15 wie in Figur 1 durch das gestrichelte Rechteck Q angedeutet verläuft. Die beschriebene Endform-Vorrichtung 1 weist dabei ein oberes Modul 7 und ein unteres Modul 8 auf, welche durch die Arretierungsvorrichtungen 11 zueinander fixiert werden. Die durchgezogene Linie auf der linken und auf dem rechten äußeren Rand der beschriebenen Endform-Vorrichtung 1 zeigen dabei das Ende und den Anfang des oberen Moduls 7 und unteren Moduls 8 an. In dem oberen Modul 7 befindet sich zudem über den vertikal verschiebbaren Komponenten 2 ein Hohlraum 3 für die vertikal verschiebbaren Komponenten 2, damit diese auch vertikal nach oben geschoben werden können, um somit eine Austrittsöffnung des ersten Fließkanals herzustellen. Die Austrittsöffnung und der Fließkanal sind in Figur 2 nicht gezeigt. Gezeigt sind die erste endständige vertikal verschiebbare Komponente 2a, die zweite endständige vertikal verschiebbare Komponente 2b, die vertikale Mittelachse 9 und die Arretierungsvorrichtung 10 zur Fixierung der vertikal verschiebbaren Komponenten 2 und zur Fixierung der endständigen vertikal verschiebbaren Komponente 2a und 2b. Gezeigt ist auch die Linie A-A, welche die Querschnittsebene für die Querschnittsansicht in Figur 3 andeuten soll.

Figur 3 zeigt eine schematische Darstellung eines Abschnittes des oberen Moduls 7 einer erfindungsgemäß beschriebenen Endform-Vorrichtung 1 in einer weiteren Ausführungsform, wobei die Querschnittebene senkrecht zur Extrusionsrichtung 15 wie in Figur 1 durch das gestrichelte Rechteck Q angedeutet verläuft. Einige der vertikal verschiebbaren Komponenten 2 sind dabei vertikal verschoben im Vergleich zur angezeigten ersten endständigen vertikal verschiebbaren Komponente 2a. In der in Figur 3 gezeigten Ausführungsform der vorliegenden Erfindung befindet sich die erste endständige vertikal verschiebbare Komponente 2a in der untersten Position, so dass an dieser Stelle keine Kautschukmischung austreten kann. In Figur 3 ist auch gezeigt, dass aufgrund der vorstehend beschriebenen vertikal nach oben verschobenen Komponenten 2 eine Austrittsöffnung 6 des ersten Fließkanals entsteht. Es ist ersichtlich, dass sich das Profil des Gesamtkautschukelements 40 verändert, je nachdem wie die vertikal verschiebbaren Komponenten verschoben worden sind. Aus Gründen der Übersichtlichkeit wurde der Hohlraum 3 für die vertikal verschiebbaren Komponenten 2 in der Figur 3 nicht gezeigt. Zudem sind in Figur 3 die Extrusionsrichtung 15, die vertikale Mittelachse 9 der Endform-Vorrichtung 1 und eine Arretierungsvorrichtung 10 zur Fixierung der vertikal verschiebbaren Komponenten 2 gezeigt. Die Arretierungsvorrichtung 10 wird dabei derart an die erste endständige vertikal verschiebbare Komponente 2a gepresst, dass der entstehende Druck auf die erste endständige vertikal verschiebbare Komponente 2a und die sich dahinter befindlichen vertikal verschiebbaren Komponenten 2 derart groß ist, dass die einzelnen vertikal verschiebbaren Komponenten 2 in ihrer jeweiligen voreingestellten Position verharren. Die Kraft muss dabei ausreichend sein, damit die verschiedenen vertikal verschiebbaren Komponenten auch während des Betriebs nicht aufgrund des hohen Druckes der Kautschukmischungen beim Ausformen nicht verschoben werden. Bevorzugt ist die Arretierungsvorrichtung 10 eine Schraube wie vorstehend in einer Ausfiihrungsform beschrieben und wird mit maximal mit einem Anzugsmoment von 20 Nm angezogen.

Figur 4 zeigt eine schematische Darstellung eines Querschnitts entlang der Linie A-A wie in Figur 2 dargestellt durch eine erfindungsgemäß beschriebenen Endform-Vorrichtung 1 in einer weiteren Ausführungsform, wobei die Querschnittsebene parallel zur Extrusionsrichtung 15 ist. Zu sehen ist eine vertikal verschiebbare Komponente 2 und deren vertikale Verschiebungsrichtung 4, die Austrittsöffnung 6 des ersten Fließkanals sowie einen Abschnitt des oberen Modul einer beschriebenen Endform-Vorrichtung 1 und das untere Modul 8 einer beschriebenen Endform-Vorrichtung 1. Der Abschnitt des oberen Modul wie in Figur 4 dargestellt zeigt zudem den Hohlraum 3 für die vertikal verschiebbaren Komponenten 2 und eine Führungsvorrichtung 16 für die vertikal verschiebbaren Komponenten 2 an. Die in Figur 4 gezeigte beschriebene Endform-Vorrichtung 1 weist zudem eine vertikal verschiebbare Komponente 2 in U-Form auf, wobei ebenfalls der Einschnitt 13 der U-Form der vertikal verschiebbaren Komponente 2 und die Höhenerstreckung 14 des Einschnittes der U-Form einer vertikal verschiebbaren Komponente 2 dargestellt ist. Es ist ersichtlich, dass der Einschnitt 13 der U-Form so ausgeformt ist, dass er passgenau über die Führungsvorrichtung 16 für die vertikal verschiebbaren Komponenten 2 geführt werden kann. Es ist dabei vorteilhaft, wenn wie in Figur 4 gezeigt die Führungsvorrichtung 16 immer noch in den Einschnitt 13 der U-förmigen vertikal verschiebbaren Komponente 2 hineinragt, auch wenn sich die vertikal verschiebbare Komponente 2 an dem vertikal tiefsten Punkt befindet. Ein Verschieben oder Verrutschen der vertikal verschiebbaren Komponente 2 in Extrusionsrichtung wird so verhindert. Bevorzugt ist auch, wenn wie in Figur 4 gezeigt, die vordere Wand 17 des oberen Moduls in vertikaler Richtung weiter erstreckt, als die in Figur 4 gezeigte Führungsvorrichtung 16. Dies hat den Vorteil, dass bei den häufig sehr hohen Drücken der Kautschukmischungen, welche in Extrusionsrichtung 15 durch eine beschriebene Endform-Vorrichtung durchgepresst werden, die vertikal verschiebbaren Komponenten 2 zusätzlich stabilisiert werden und somit nicht verrutschen. Hierdurch kann eine dauerhafte und präzise voreingestellte Produktion des gewünschten Gesamtkautschukelements 40 garantiert werden. In Figur 4 sind auch die Höhe 21 der vertikal verschiebbaren Komponenten 2 und die Tiefe 23 der vertikal verschiebbaren Komponenten 2 gezeigt.

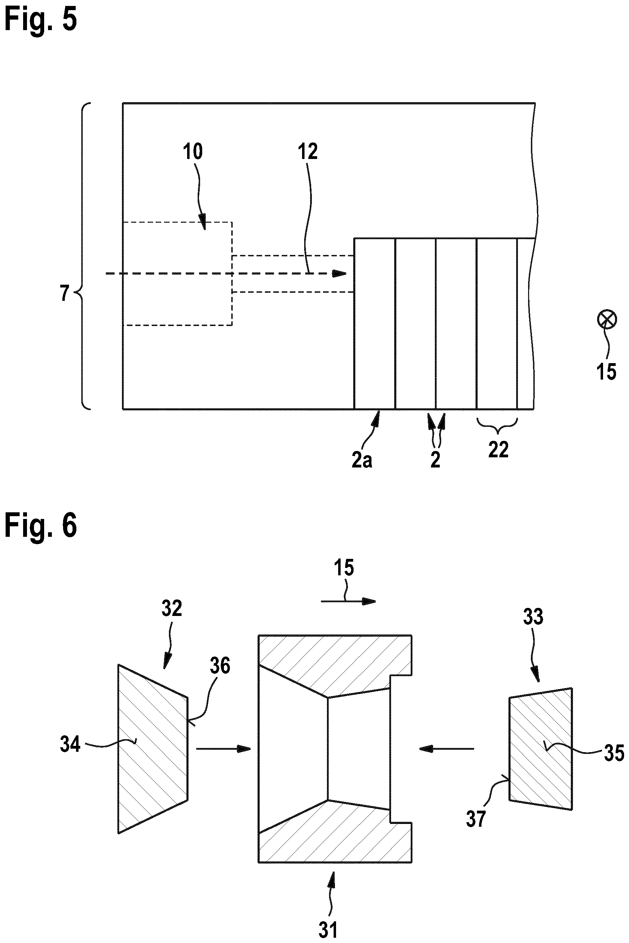

Figur 5 zeigt eine schematische Darstellung eines Querschnitts eines Abschnittes des oberen Moduls 7 einer erfindungsgemäß beschriebenen Endform-Vorrichtung 1 in einer weiteren Ausführungsform, wobei die Querschnittebene senkrecht zur Extrusionsrichtung 15 wie in Figur 1 durch das gestrichelte Rechteck Q angedeutet verläuft. Zudem sind in Figur 5 die vertikal verschiebbaren Komponenten 2 und eine erste endständige vertikal verschiebbare Komponente 2a gezeigt, so wie eine Arretierungsvorrichtung 10 zur Fixierung der vertikal verschiebbaren Komponenten 2 und deren Fixierungsrichtung 12. Der Fachmann kann der Figur 10 entnehmen, dass die Arretierungsvorrichtung 10, die vertikal verschiebbaren Komponenten 2 in der jeweiligen gewünschten Position fixieren kann, in dem die Arretierungsvorrichtung 10 einen Druck auf die vertikal verschiebbaren Komponenten 2 in Richtung der Fixierungsrichtung 12 der Arretierungsvorrichtung 11 für die vertikal verschiebbaren Komponenten 2 ermöglicht. In Figur 5 ist auch die Breite 22 der vertikal verschiebbaren Komponenten 2 gezeigt.

Figur 6 zeigt eine schematische Darstellung der Aufnahme eines Ausgangsmoduls 33 und eines Eingangsmoduls 32 einer Vorform-Vorrichtung in eine Aufnahmevorrichtung 31 einer beschriebenen Extruderanlage. Zu sehen ist, dass sich die Seitenfläche 34 des Eingangsmoduls 32 hin zur Kontaktfläche 36 des Eingangsmoduls 32 verjüngt, wodurch das Eingangsmodul 32 passgenau in Extrusionsrichtung 15 in die Aufnahmevorrichtung 31 aufgenommen werden kann. Im Gegensatz dazu wird das Ausgangsmodul 33 der Vorform-Vorrichtung entgegengesetzt der Extrusionsrichtung 15 in die Aufnahmevorrichtung 31 der beschriebenen Extruderanlage aufgenommen. Die Kontaktfläche 36 des Eingangsmoduls 32 weist bevorzugt die gleiche Fläche und gleiche Flächenform wie die Kontaktfläche 37 des Ausgangsmoduls 33 auf, damit beide Kontaktflächen flächendeckend aufeinander aufliegen.
Aufgrund der vorstehend beschriebenen Konstruktion ist es möglich, das Ausgangsmodul 33 unabhängig und insbesondere ohne Ausbau des Eingangsmoduls 32 aus der Aufnahmevorrichtung 31 der Extruderanlage herauszunehmen. Die passgenaue Einführung des Ausgangsmoduls 33 wird ebenfalls durch die sich verjüngende Seitenfläche 35 des Ausgangsmoduls 33 gewährleistet wie dies vorstehend für das Eingangsmodul 32 beschrieben ist.

### Bezugszeichenliste:

1 Endform-Vorrichtung
2 vertikal verschiebbare Komponente
2a erste endständige vertikal verschiebbare Komponente
2b zweite endständige vertikal verschiebbare Komponente
3 Hohlraum für vertikal verschiebbare Komponenten
4 vertikale Verschiebungsrichtung einer vertikal verschiebbaren Komponente
5 erster Fließkanal
6 Austrittsöffnung des ersten Fließkanals
7 oberes Modul der Endform-Vorrichtung
8 unteres Modul der Endform-Vorrichtung
9 vertikale Mittelachse der Endform-Vorrichtung
10 Arretierungsvorrichtung zur Fixierung der vertikal verschiebbaren Komponenten
11 Arretierungsvorrichtung zur Fixierung des oberen Moduls mit unterem Modul der Endform-Vorrichtung
12 Fixierungsrichtung der Arretierungsvorrichtung für vertikal verschiebbaren Komponenten
13 Einschnitt der U-Form einer vertikal verschiebbaren Komponente
14 Höhenerstreckung des Einschnitts der U-Form einer vertikal verschiebbaren Komponente
15 Extrusionsrichtung
16 Führungsvorrichtung für vertikal verschiebbare Komponenten
17 vordere Wand des oberen Moduls
18 Extruderanlage
20 Vorform-Vorrichtung
21 Höhe einer vertikal verschiebbaren Komponente
22 Breite einer vertikal verschiebbaren Komponente
23 Tiefe einer vertikal verschiebbaren Komponente
30 Fließkanäle der Extruderanlage
31 Aufnahmevorrichtung einer Extruderanlage
32 Ausgangsmodul einer Vorform-Vorrichtung
33 Eingangsmodul einer Vorform-Vorrichtung
34 Seitenflächen des Eingangsmoduls mit trapezförmige Fläche
35 Seitenfläche des Ausgangsmoduls mit trapezförmige Fläche
36 Kontaktfläche des Eingangsmoduls
37 Kontaktfläche des Ausgangsmoduls
40 Gesamtkautschukelement

## Patentansprüche

1. Endform-Vorrichtung zum Ausformen von extrudierten Kautschukmischungen zu einem Gesamtkautschukelement (40), aufweisend einen ersten Fließkanal (5), wobei
- die Endform-Vorrichtung (1) im ersten Fließkanal (5) zwei, drei, vier, fünf, sechs oder mehr vertikal verschiebbare Komponenten (2) aufweist,
wobei eine Mehrzahl der verschiebbaren Komponenten (2) in einem Querschnitt entlang der Extrusionsrichtung (15) eine zu einer vertikalen Führung der vertikal verschiebbaren Komponenten (2) geeignete U-Form aufweist,
wobei eine Mehrzahl oder jede der verschiebbaren Komponenten (2) in einem Querschnitt entlang der Extrusionsrichtung (15) eine zu einer vertikalen Führung der vertikal verschiebbaren Komponenten (2) geeignete U-Form aufweist, wobei die vertikal verschiebbaren Komponenten (2) in U-Form zwei geradlinige Beine in dieselbe Erstreckungsrichtung (14) aufweisen und die beiden gradlinigen Beine an der Unterseite durch ein Verbindungsstück miteinander verbunden sind, **dadurch gekennzeichnet, dass** die beiden gradlinigen Beine so angeordnet sind, dass die beiden gradlinigen Beine der vertikal verschiebbaren Komponente (2) in U-Form in Extrusionsrichtung (15) hintereinander liegen.

2. Vorrichtung nach Anspruch 1, wobei mindestens eine der vertikal verschiebbaren Komponenten (2)
- eine Höhe (21) im Bereich von 15 mm bis 120 mm, bevorzugt im Bereich von 20 mm bis 100 mm, besonders bevorzugt eine Höhe im Bereich von 30 bis 60 mm,
und/oder
- eine Tiefe (23) im Bereich von 8 mm bis 25 mm, bevorzugt im Bereich von 14 mm bis 16 mm,
und/oder
- eine Breite (22) im Bereich von 1 mm bis 10 mm, bevorzugt eine Breite im Bereich von 4 mm bis 6 mm,
aufweist.

3. Vorrichtung nach einem der vorangehenden Ansprüche, wobei mindestens eine der vertikal verschiebbaren Komponenten (2) in vertikale Richtung um 5 mm bis 60 mm verschoben werden kann, bevorzugt um 5 mm bis 25 mm, besonders bevorzugt um 5 mm bis 15 mm.

4. Vorrichtung nach einem der vorangehenden Ansprüche, wobei die Endform-Vorrichtung (1) eine Anzahl von vertikal verschiebbaren Komponenten (2) im Bereich von 40 bis 400 aufweist, bevorzugt eine Anzahl von 50 bis 200, besonders bevorzugt eine Anzahl von 70 bis 80.

5. Vorrichtung nach einem der vorangehenden Ansprüche, wobei der erste Fließkanal (5)
- eine Breite im Bereich von 100 mm bis 1000 mm, bevorzugt im Bereich von 150 mm bis 400 mm,
und/oder
- eine Tiefe im Bereich von 10 bis 50 mm, bevorzugt im Bereich von 15 bis 25 mm, aufweist.

6. Vorrichtung nach einem der vorangehenden Ansprüche, wobei eine, zwei oder mehr Arretierungsvorrichtungen (10) zur Fixierung der vertikal verschiebbaren Komponenten (2) derart einen Druck auf eine der zwei endständigen (2a, 2b) oder auf die zwei endständigen (2a, 2b) vertikal verschiebbaren Komponenten der vertikal verschiebbaren Komponenten (2) ausüben, dass sämtliche der vertikal verschiebbaren Komponenten (2) in einer voreingestellten Position eingeklemmt werden.

7. Vorrichtung nach Anspruch 1, wobei der Einschnitt (13) der U-Form sämtlicher verschiebbarer Komponenten (2) eine Höhenerstreckung (14) im Bereich von 5 mm bis 70 mm aufweist, bevorzugt im Bereich von 10 mm bis 35 mm, besonders bevorzugt im Bereich von 15 bis 25 mm.

8. Vorrichtung nach einem der vorangehenden Ansprüche, wobei die Vorrichtung mindestens einen Aktor zum vertikalen Verschieben der vertikal verschiebbaren Komponenten (2) aufweist,
wobei der mindestens eine Aktor das vertikale Verschieben der vertikal verschiebbaren Komponenten (2) mittels hydraulischen, pneumatischen oder elektro-mechanischen Mitteln durchführt.

9. Extruder-Form-System aufweisend eine Endform-Vorrichtung nach einem der vorangehenden Ansprüche und mindestens eine Vorform-Vorrichtung (20) zum Positionieren von extrudierten Kautschukmischungen.

10. Extruder-Form-System nach Anspruch 9, wobei
- die Vorform-Vorrichtung (20) ein Eingangsmodul (32) und ein Ausgangsmodul (33) aufweist
und
- das Ausgangsmodul (33) der Vorform-Vorrichtung (20) an der Endform-Vorrichtung (1) mithilfe einer Befestigungsvorrichtung befestigt werden kann.

11. Verwendung
- einer Endform-Vorrichtung nach einem der Ansprüche 1 bis 8 oder
- eines Extruder-Form-System nach einem der Ansprüche 9 bis 10 zum Ausformen von extrudierten Kautschukmischungen zu einem Gesamtkautschukelement (40).

## Claims

1. Final-die device for shaping extruded rubber compounds to form an overall rubber element (40), comprising a first flow channel (5), wherein
- the final-die device (1) has two, three, four, five, six or more vertically displaceable components (2) in the first flow channel (5), wherein a plurality of the displaceable components (2) have in a cross section along the direction of extrusion (15) a U shape suitable for vertical guidance of the vertically displaceable components (2),
wherein a plurality or each of the displaceable components (2) has/have in a cross section along the direction of extrusion (15) a U shape suitable for vertical guidance of the vertically displaceable components (2), wherein the vertically displaceable components (2) have in the U shape two straight legs in the same direction of extent (14) and the two straight legs are connected to one another on the underside by a connecting piece, **characterized in that** the two straight legs are arranged such that the two straight legs of the vertically displaceable components (2) in the U shape lie one behind the other in the direction of extrusion (15).

2. Device according to Claim 1, wherein at least one of the vertically displaceable components (2) has
- a height (21) in the range of 15 mm to 120 mm, preferably in the range of 20 mm to 100 mm, particularly preferably a height in the range of 30 to 60 mm, and/or
- a depth (33) in the range of 8 mm to 25 mm, preferably in the range of 14 mm to 16 mm,
and/or
- a width (22) in the range of 1 mm to 10 mm, preferably a width in the range of 4 mm to 6 mm.

3. Device according to one of the preceding claims, wherein at least one of the vertically displaceable components (2) can be displaced in the vertical direction by 5 mm to 60 mm, preferably by 5 mm to 25 mm, particularly preferably by 5 mm to 15 mm.

4. Device according to one of the preceding claims, wherein the final-die device (1) has a number of vertically displaceable components (2) in the range of 40 to 400, preferably a number of 50 to 200, particularly preferably a number of 70 to 80.

5. Device according to one of the preceding claims, wherein the first flow channel (5) has
- a width in the range of 100 mm to 1000 mm, preferably in the range of 150 mm to 400 mm,
and/or
- a depth in the range of 10 to 50 mm, preferably in the range of 15 to 25 mm.

6. Device according to one of the preceding claims, wherein one, two or more arresting devices (10) for fixing the vertically displaceable components (2) exert such a pressure on one of the two components at the ends (2a, 2b) or on the two vertically displaceable components at the ends (2a, 2b) of the vertically displaceable components (2) that all of the vertically displaceable components (2) are clamped in a preset position.

7. Device according to Claim 1, wherein the cut-out (13) of the U shape of all the displaceable components (2) has a height extent (14) in the range of 5 mm to 70 mm, preferably in the range of 10 mm to 35 mm, particularly preferably in the range of 15 to 25 mm.

8. Device according to one of the preceding claims, wherein the device has at least one actuator for vertically displacing the vertically displaceable components (2),
wherein the at least one actuator carries out the vertical displacement of the vertically displaceable components (2) by means of hydraulic, pneumatic or electromechanical means.

9. Extruder-die system comprising a final-die device according to one of the preceding claims and at least one pre-die device (20) for positioning extruded rubber compounds.

10. Extruder-die system according to Claim 9, wherein
- the pre-die device (20) has an input module (32) and an output module (33)
and
- the output module (33) of the pre-die device (20) can be fastened on the final-die device (1) with the aid of a fastening device.

11. Use
- of a final-die device according to one of Claims 1 to 8 or
- of an extruder-die system according to either of Claims 9 and 10 for shaping extruded rubber compounds to form an overall rubber element (40).

## Revendications

1. Dispositif de moule final destiné au démoulage de mélanges de caoutchouc extrudés pour obtenir un élément global de caoutchouc (40), présentant un premier canal d'écoulement (5), dans lequel
- le dispositif de moule final (1) présente dans le premier canal d'écoulement (5) deux, trois, quatre, cinq, six ou plus de composants (2) coulissant verticalement,
dans lequel une pluralité des composants (2) coulissant présente dans une section transversale le long de la direction d'extrusion (15) une forme de U adaptée pour guider verticalement les composants (2) coulissant verticalement,
dans lequel une pluralité ou chacun des composants (2) coulissant présente dans une section transversale le long de la direction d'extrusion (15) une forme de U adaptée pour guider verticalement les composants (2) coulissant verticalement, les composants (2) coulissant verticalement présentant en forme de U deux branches droites dans la même direction d'extension (14) et les deux branches droites étant reliées l'une à l'autre sur la face inférieure par une pièce de liaison,
**caractérisé en ce que** les deux branches droites sont disposées de telle sorte que les deux branches droites des composants (2) coulissant verticalement sont situées en forme de U l'une après l'autre dans la direction d'extrusion (15).

2. Dispositif selon la revendication 1, dans lequel au moins l'un des composants (2) coulissant verticalement présente
- une hauteur (21) dans la plage de 15 mm à 120 mm, de préférence dans la plage de 20 mm à 100 mm, de plus grande préférence une hauteur dans la plage de 30 à 60 mm, et/ou
- une profondeur (23) dans la plage de 8 mm à 25 mm, de préférence dans la plage de 14 mm à 16 mm, et/ou
- une largeur (22) dans la plage de 1 mm à 10 mm, de préférence une largeur dans la plage de 4 mm à 6 mm.

3. Dispositif selon l'une quelconque des revendications précédentes, dans lequel au moins l'un des composants (2) coulissant verticalement peut coulisser dans la direction verticale de 5 mm à 60 mm, de préférence de 5 mm à 25 mm, encore plus préférablement de 5 mm à 15 mm.

4. Dispositif selon l'une quelconque des revendications précédentes, dans lequel le dispositif de moule final (1) présente un nombre de composants (2) coulissant verticalement dans la plage de 40 à 400, de préférence un nombre de 50 à 200, encore plus préférablement un nombre de 70 à 80.

5. Dispositif selon l'une quelconque des revendications précédentes, dans lequel le premier canal d'écoulement (5) présente
- une largeur dans la plage de 100 mm à 1000 mm, de préférence dans la plage de 150 mm à 400 mm, et/ou
- une profondeur dans la plage de 10 à 50 mm, de préférence dans la plage de 15 à 25 mm.

6. Dispositif selon l'une quelconque des revendications précédentes, dans lequel un, deux ou plus de deux dispositifs de blocage (10) permettant de fixer les composants (2) coulissant verticalement exercent une pression sur l'un des deux composants coulissant d'extrémité (2a, 2b) ou sur les deux composants coulissant d'extrémité (2a, 2b) des composants (2) coulissant verticalement telle que tous les composants (2) coulissant verticalement sont serrés dans une position préréglée.

7. Dispositif selon la revendication 1, dans lequel l'entaille (13) de la forme de U de tous les composants (2) coulissant présente une extension en hauteur (14) dans la plage de 5 mm à 70 mm, de préférence dans la plage de 10 mm à 35 mm, de plus grande préférence dans la plage de 15 à 25 mm.

8. Dispositif selon l'une quelconque des revendications précédentes, dans lequel le dispositif présente au moins un actionneur pour le coulissement vertical des composants (2) coulissant verticalement,
dans lequel ledit au moins un actionneur effectue le coulissement vertical des composants (2) coulissant verticalement à l'aide de moyens hydrauliques, pneumatiques ou électromécaniques.

9. Système de moule d'extrudeuse, présentant un dispositif de moule final selon l'une quelconque des revendications précédentes et au moins un dispositif de préforme (20) destiné à positionner des mélanges de caoutchouc extrudés.

10. Système de moule d'extrudeuse selon la revendication 9, dans lequel
- le dispositif de préforme (20) présente un module d'entrée (32) et un module de sortie (33), et
- le module de sortie (33) du dispositif de préforme (20) peut être fixé au dispositif de moule final (1) à l'aide d'un dispositif de fixation.

11. Utilisation
- d'un dispositif de moule final selon l'une quelconque des revendications 1 à 8, ou
- d'un système de moule d'extrudeuse selon l'une quelconque des revendications 9 à 10 destiné au démoulage de mélanges de caoutchouc extrudés pour obtenir un élément global de caoutchouc (40).
